# EUROPEAN PATENT APPLICATION

(11) **EP 4 354 374 A1**
(43) Date of publication of application: **17.04.2024**
(21) Application number: 22881294.7
(22) Date of filing: 07.10.2022
(51) Int. Cl.: G06Q 10/10, G06F 40/166, G06F 9/52, G06Q 10/06

(54) **METHOD FOR PROVIDING COLLABORATIVE EDITING SERVICE AND SERVER THEREFOR**

(30) Priority: 12.10.2021 KR 20210135152; 23.11.2021 KR 20210161876
(71) Applicant: Samsung Electronics Co., Ltd., Suwon-si, Gyeonggi-do 16677 (KR)
(72) Inventor: PARK, Gun, Suwon-si Gyeonggi-do 16677 (KR); YEO, Jaeyung, Suwon-si Gyeonggi-do 16677 (KR)
(74) Representative: HGF
(86) International application number: PCT/KR2022/015206
(87) International publication number: WO 2023/063666

(57) **Abstract**

A server, according to a specific embodiment, comprises a communication circuit, a memory, and at least one processor. The at least one processor may be configured so as to: connect with a plurality of electronic devices in order for collaborative editing; identify, among the plurality of electronic devices, at least one electronic device which has been disconnected from the server; identify a first check point associated with the disconnection time point of the at least one electronic device; store, in the memory, new editing instructions acquired by sequentially processing editing instructions received after the first check point from the electronic devices which are connected, among the plurality of electronic devices; and, in response to the reconnecting of the at least one electronic device, transmit the new editing instructions to the at least one electronic device through the communication circuit..

## Description

### Technical Field

Certain embodiments disclosed herein relate to a method for providing a collaborative editing service and a server therefor.

### Background Art

Electronic devices, such as smartphones, provide increasing number of ways for instantaneous messaging. The messaging is generally performed through a mobile messenger. Moreover, social network services (SNS) allow user's to use social networks.

Additionally, the electronic device can be used to create electronic documents. Moreover, since the Internet is accessible at any place and time, users can always view, compose, and edit documents without having to install applications related to electronic documents in electronic devices.

A document editing service may enable multiple electronic devices to collaboratively edit a single electronic document. Accordingly, multiple users can easily identify corrections made on an identical document by others, thereby supporting efficient collaboration between users.

In particular, users of multiple electronic devices may be able to simultaneously edit the identical document in real time through a server. For example, in connection with a web-based document editing service, multiple electronic devices may access a server for collaborative editing, respective electronic devices may transfer changes made to compose and edit the corresponding document to the server, and the server may transmit the changes to other electronic devices. In this manner, the document displayed on multiple electronic devices participating in collaborative editing may always maintain the same editing state.

### Detailed Description of the Invention

### Technical Problem

However, if connection between an electronic device and the server becomes unstable temporarily, changes made by other electronic devices accumulate in the server without being transferred to the electronic device, and the accumulated changes are inevitably transferred to the electronic device all at once after connection with the server is reestablished. The electronic device may have an increased load caused by successive operations of the accumulated changes received all at once. Therefore, there is a need to prevent the load caused by excessive operations when the electronic device resumes communication after temporarily disconnecting from the server due to a failure.

Certain embodiments disclosed herein may provide a method for providing a collaborative editing service capable of reducing the load of an electronic device configured to execute an editing command, and a server therefor.

### Technical Solution

According to certain embodiments, a server may include communication circuitry, a memory, and at least one processor, wherein the at least one processor is configured to connect with a plurality of electronic devices for collaborative editing, identify at least one electronic device disconnected from the server among a plurality of connected electronic devices, identify a first checkpoint associated with a time point at which the at least one electronic device is disconnected, store a new editing command acquired by sequentially processing editing commands received from the connected electronic devices among the plurality of electronic devices after the first checkpoint, in the memory, and in response to the at least one electronic device being reconnected, transmit the new editing command to the at least one electronic device through the communication circuitry.

According to certain embodiments, a method for providing a collaborative editing service in a server may include connecting with a plurality of electronic devices for collaborative editing, identifying at least one electronic device disconnected from the server among a plurality of electronic devices, identifying a first checkpoint associated with a time point at which the at least one electronic device is disconnected, storing a new editing command acquired by sequentially processing editing commands received from the connected electronic devices among the plurality of electronic devices after the first checkpoint, and in response to the at least one electronic device being reconnected, transmitting the new editing command to the at least one electronic device.

### Brief Description of Drawings

FIG. 1 is a block diagram illustrating an electronic device in a network environment according to certain embodiments.
FIG. 2 is a system configuration diagram for providing a collaborative editing service according to certain embodiments.
FIG. 3A is a diagram illustrating operations of a server and an electronic device when a connection is cut off.
FIG. 3B is a diagram illustrating an exemplary output screen of an electronic device according to an operation between a server and the electronic device when a connection is resumed.
FIG. 4 is an internal block diagram illustrating a server and an electronic device for collaborative editing according to certain embodiments.
FIG. 5 is a detailed block diagram illustrating an operation of a server for providing a collaborative editing service according to certain embodiments.
FIG. 6 is a flowchart illustrating an operation in a server for providing a collaborative editing service according to certain embodiments.
FIG. 7 is a flowchart illustrating an operation in a server when a connection with an electronic device is cut off and reconnected according to certain embodiments.
FIG. 8 is a flowchart illustrating an operation in an electronic device upon disconnection and reconnection with a server according to certain embodiments.
FIG. 9A is a diagram illustrating an operation between a server and an electronic device when a connection is resumed according to certain embodiments.
FIG. 9B is a diagram illustrating an exemplary output screen of an electronic device when a connection is resumed according to certain embodiments.
FIG. 10 is a diagram illustrating an operation in a server when an edit command conflicts according to certain embodiments.
FIG. 11 is a diagram illustrating a method of storing a command in a server according to certain embodiments.
FIG. 12 is a diagram illustrating an exemplary screen during collaborative editing in each electronic device according to certain embodiments of the present disclosure.

In connection with the description of the drawings, the same or similar reference numerals may be used for the same or similar components.

### Mode for Carrying out the Invention

According to certain embodiments, with regard to each electronic device which has temporarily lost communication with a server, editing commands during the communication disconnection are operated in advance and are provided so as to correspond to the pertinent electronic device when communication is resumed, thereby reducing the load of the electronic device which has to process the editing commands when communication is resumed.

According to certain embodiments, when an electronic device is newly connected or re-connected with a server, the electronic device may receive a result of operations made in advance with regard to the electronic device and may apply common editing particulars, thereby minimizing the load heavily applied to the electronic device, and enabling real-time simultaneous editing.

According to certain embodiments, electronic devices disconnected from a server may be identified, and editing commands during communication disconnection are operated in advance only when an electronic device is disconnected, thereby efficiently using resources in a server configured to manage collaborative editing for multiple electronic devices.

Advantageous effects obtainable from the disclosure are not limited to the above-mentioned advantageous effects, and other advantageous effects not mentioned herein will be clearly understood by those skilled in the art to which the disclosure pertains.

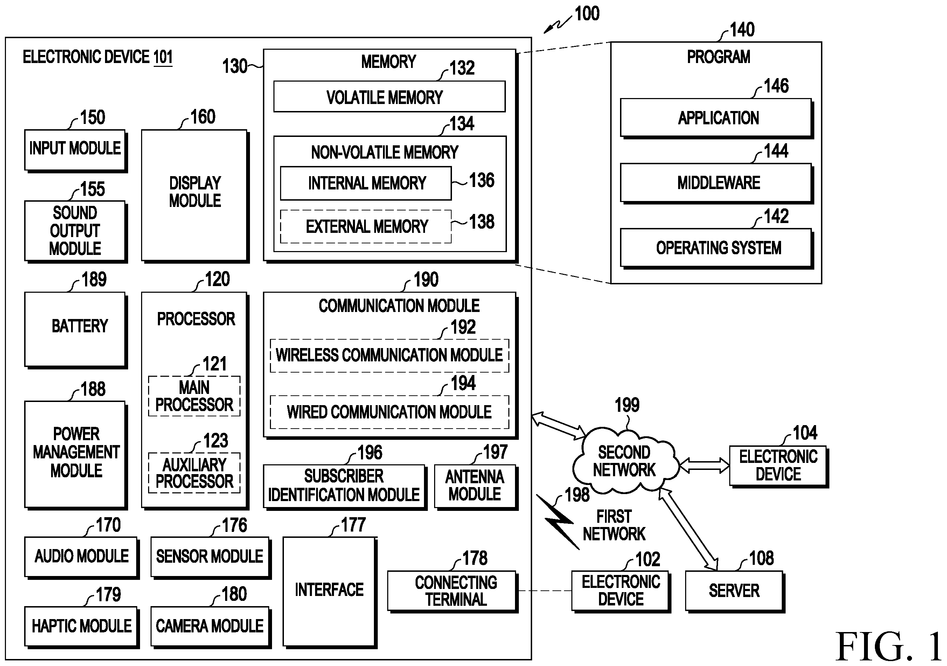

FIG. 1 describes an electronic device where certain embodiments can be practiced.

### ELECTRONIC DEVICE

FIG. 1 is a block diagram illustrating an electronic device 101 in a network environment 100 according to certain embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active (e.g., executing an application) state. According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence model is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., an electronic device 102 (e.g., a speaker or a headphone)) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to certain embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device 100 can include applications for creating an electronic document. Moreover, the electronic device 100 can also be used to edit an electronic document at the server 108. For example, the server 108 can include a document website, that includes the application for editing the document. A user associated with the electronic device 100 can edit the document at the server 108. Moreover, users associated with electronic devices 102 and 104 can also edit electronic documents at server 108.

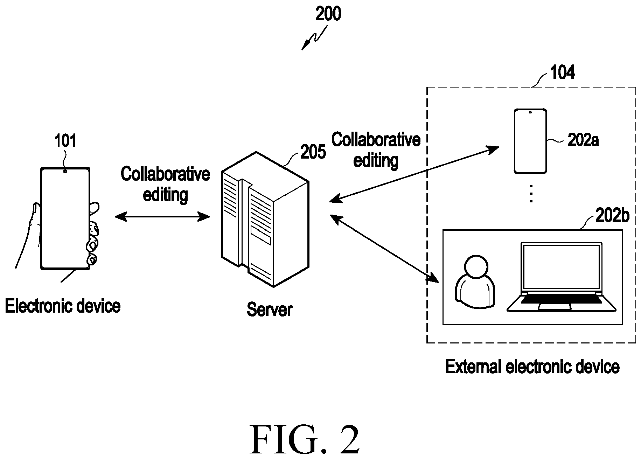

FIG. 2 is a system configuration diagram for providing a collaborative editing service according to certain embodiments. A server 205 can store an electronic document. Users associated with electronic devices 101 and 104 can collaboratively edit the electronic document.

Referring to FIG. 2, a system 200 for providing a collaborative editing service may include an electronic device 101, at least one server 205, and at least one external electronic device 104. Here, the electronic device 101 and the at least one external electronic device 104 are devices that receive a collaborative editing service through the server 205, and a plurality of clients may participate in the collaborative editing. The electronic device 101 of FIG. 2 may include the same or similar components as or to those of the electronic device 101 of FIG. 1. For example, the electronic device 101 is a device that receives a collaborative editing service through the server 205, and the server 205 may be connected to the external electronic device 104 to support a collaborative editing service in such a manner that the user of the electronic device 101 may allow the other party who wants to participate in collaborative editing to log in the collaborative editing service and use the same.

The at least one external electronic device 104 may participate in collaborative editing with the electronic device 101 through the server 205 and may communicate with the electronic device 101. For example, the at least one external electronic device 104 may include at least one device such as a smart phone 202a or a computer 202b, but may not be limited thereto.

The electronic device 101 may execute an application capable of performing collaborative editing or may access the server 205 to receive a web-based collaborative editing service. Here, the collaborative editing may refer to an operation of collaboratively editing a content (e.g., an electronic document) shared by a plurality of clients. An electronic device can include text, as well as formatting. When the electronic device 101 transmits an editing command for generating and editing a corresponding electronic document to the server 205 after accessing the server 205 together with the external electronic device 104, the server 205 may transmit a change corresponding to the editing command to another external electronic device 104. In this manner, documents displayed on a plurality of electronic devices participating in collaborative editing may always be maintained in the same editing state. Here, the editing command is a command for editing an electronic document shared by a plurality of clients, and may include various commands input to the electronic document for editing. For example, the editing command may include a correction command for correcting the content of an electronic document for editing, a deletion command for deleting objects such as text, images, and tables inserted in the document, and an addition command for adding the above objects to the document. Accordingly, the editing command input by any one of the plurality of clients may be transmitted to the server 205 and may then be transmitted to all other clients participating in the collaborative editing through the server 205.

The at least one server 205 may be the server 108 described above with reference to FIG. 1. According to certain embodiments, the at least one server 205 may communicate with the user-side electronic device 101 through a network.

The server 205 may be a server that provides a collaborative editing service that the user of the electronic device 101 wants to receive, and may be connected to the electronic device 101 through an application for collaborative editing and may provide various types of electronic document-based collaborative editing services to the electronic device 101. The server 205 may store an electronic document for editing that can be provided to the electronic device 101, and may provide the electronic document for editing to the electronic device 101 according to a request of the electronic device 101.

However, if a connection between an electronic device 101 and the server 205 becomes unstable temporarily, changes made by other electronic devices 202a, 202b accumulate in the server without being transferred to the electronic device 101, and the accumulated changes are inevitably transferred to the electronic device 101 all at once after connection with the server is reestablished. The electronic device 101 may have an increased load caused by successive operations of the accumulated changes received all at once. Accordingly, certain embodiments prevent an excessive load caused by the successive operations when the electronic device resumes communication.

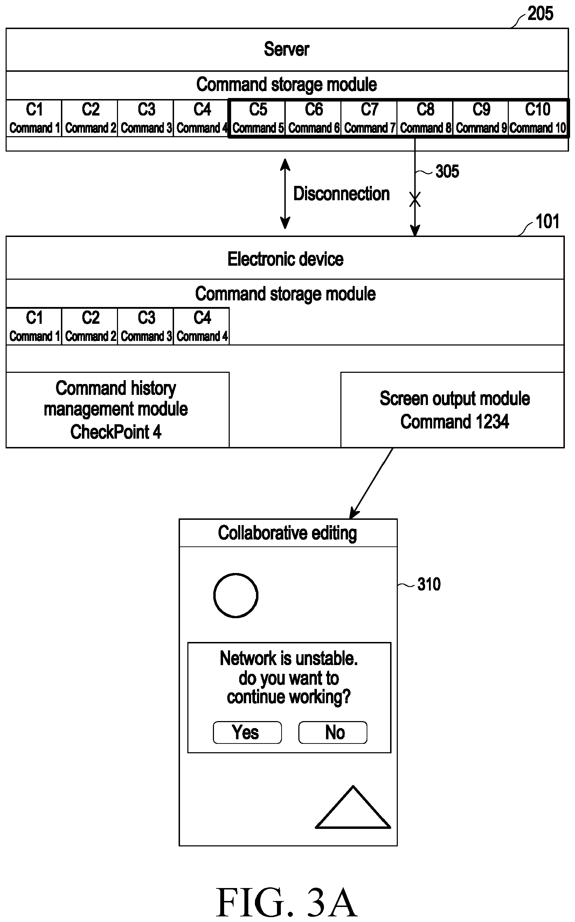

FIG. 3A is a diagram illustrating operations of a server and an electronic device when a connection is cut off.

Referring to FIG. 3A, when an editing command is generated from any one of the plurality of clients, the editing commands may be transmitted to the server 205, and the server 205 may transmit the editing command to all of the other clients having client/server connections with the server 205. Accordingly, after receiving the editing commands, the electronic device 101 effectuate each of the editing commands to the document according to a time sequence, and may sequentially display the resulting document on the screen.

However, when a temporary disconnection situation with the server 205 occurs in at least one client (e.g., the electronic device 101), editing commands (e.g., command 5 {C5} to command 10 {C10}) 305 in another client may be accumulated in the server 205 (e.g., a command storage module) without being transmitted to the disconnected electronic device 101 ("disconnected device").,

As a result, the electronic device 101 may display only a common editing screen to which only editing commands (e.g., command 1 {C1} to command 4 {C4}) immediately before disconnection occurs are reflected, and content 310 indicating that the network is in an unstable state.

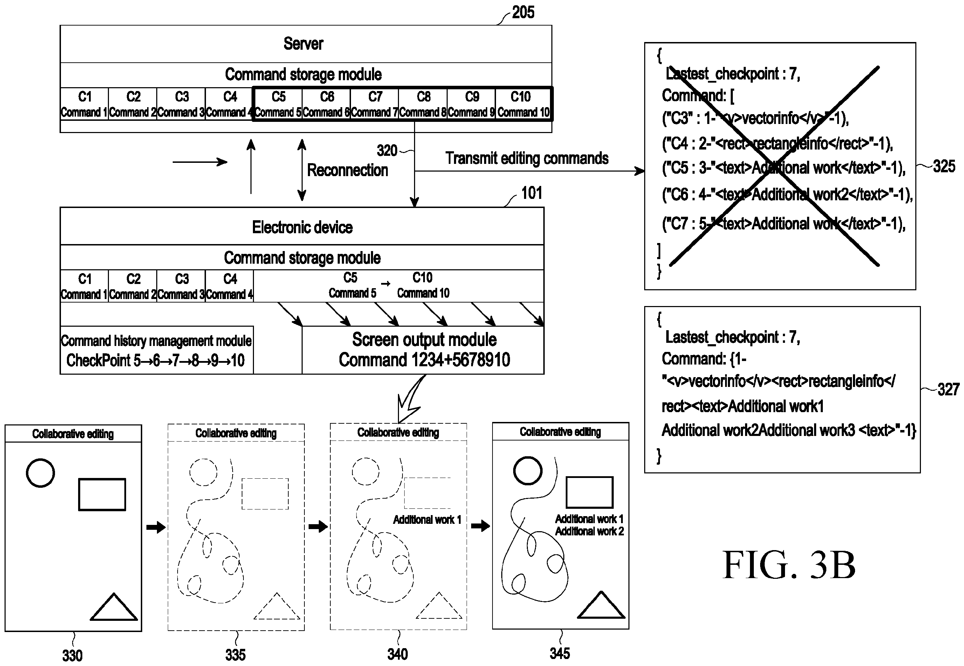

Next, when reconnecting with the server 205, as illustrated in FIG. 3B, the server 205 may transmit the accumulated and managed editing commands (e.g., command 5 {C5} to command 10 {C10}) 320 in the other client to the electronic device 101. Here, FIG. 3B is a diagram illustrating an exemplary output screen of an electronic device according to an operation between a server and the electronic device when a connection is resumed.

Referring to FIG. 3B, the server 205 may comprehensively transmit the accumulated editing commands (e.g., commands 5 {C5} to 10 {C10}) 320 to the electronic device 101. For example, each of the editing commands may be transmitted to the disconnected device, electronic device 101 in the form of a list 325 at once. The electronic device 101 may sequentially calculate (e.g., in the order of command 5 {C5} → command 6 {C6} → command 7 {C7} → command 8 {C8} → command 9 {C9} → command 10 {C10}) the comprehensively received editing commands (e.g., command 5 {C5} to command 10 {C10}), and may sequentially display screens 330, 335, 340, and 345 in which a change according to the editing command is reflected for each calculation. When such accumulated changes are received all at once, the load due to sequential effectuation of the changes may be excessive in the electronic device 101.

When the electronic device 101, which was temporarily disconnected from the server 205, is reconnected, a normal editing environment may not be provided due to excessive number of accumulated editing commands. Therefore, it is necessary to distribute the load applied to the electronic device 101 when a temporary disconnection occurs during collaborative editing.

In order to distribute the load applied to the electronic device 101, the server 205 may provide one new editing command newly generated by sequentially processing the accumulated editing commands during disconnection, to the electronic device 101 upon reconnection, thereby reducing a load due to the processing of the editing command in the electronic device 101 upon reconnection.

The server 205 may sequentially process the editing commands generated by the external electronic device 104 the electronic device 101 is disconnected, may define as one new task by using checkpoints associated with the sequential processing time points upon reconnection with the electronic device 101, may generate a new editing command separately for the electronic device 101 in relation to the defined new task, and may provide the generated new editing command to the electronic device 101. For example, the electronic device 101 may not receive editing commands 325 (e.g., command 5 {C5} + command 6 {C6} + command 7 {C7} + command 8 {C8} + command 9 {C9} + command 10 {C10}) obtained by simply combining the sequential editing commands (e.g., in the order of command 5 {C5} → command 6 {C6} → command 7 {C7} → command 8 {C8} → command 9 {C9} → command 10 {C10}) into one from the server 205, but may receive a new type of editing command 327 (e.g., merged command = command 5 {C5} → command 10 {C10}). In response to this, the electronic device 101 may calculate the received editing command 327, that is, one new editing command, and may immediately display the screen 345 in which a change according to the calculation result is reflected, without delay. A detailed description for generating and providing the new type of one editing command in the server 205 upon reconnection with the electronic device 101 will be described later.

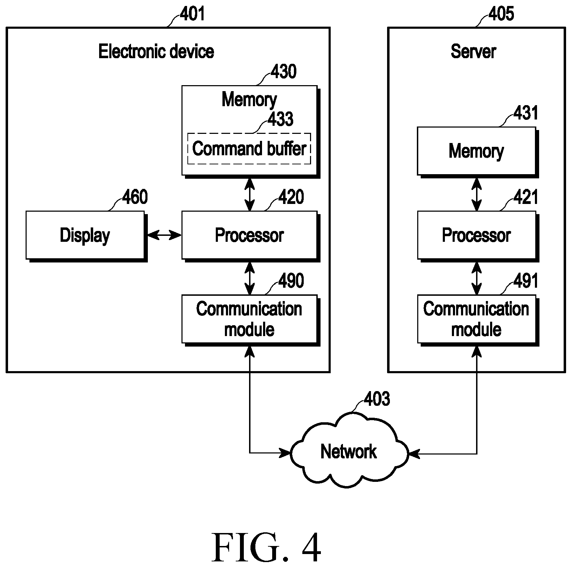

FIG. 4 is an internal block diagram illustrating a server and an electronic device for collaborative editing according to certain embodiments. In FIG. 4, an electronic device 401 will be exemplified and described as an example of an electronic device that is disconnected during a collaborative editing service.

The electronic device 401 of FIG. 4 may include the same or similar components as or to the electronic device 101 of FIG. 1. In addition, the server 405 as well as the electronic device 401 may include the same or similar internal components as shown in FIG. 4.

The electronic device 401 includes a memory 430 that can further include a command buffer. When electronic device 401 is disconnected and later reconnected, commands that accumulated while the electronic device 401 can be stored in the command buffer 433. The electronic device 401 can then apply the commands to the document.

Referring to FIG. 4, the electronic device 401 and the server 405 may include at least one processor 420 and 421, memories 430 and 431, and communication modules 490 and 491.

First, referring to the operation of the server 405, the processor 421 may control the memory 431 and the communication module 491 which are connected to the processor 421, and may perform various data processing or operations.

The communication module 491 may be communicatively connected to a plurality of clients (e.g., the electronic device 401 and the external electronic device 104) to provide a collaborative editing service through a wired/wireless network 403. Here, a communication method in a communication network (e.g., a mobile communication network, a wired Internet, or a wireless Internet) included in the network 403 is not limited.

The processor 421 may support the collaborative editing service when connected to the plurality of clients (e.g., the electronic device 401 and the external electronic device 104). For example, when each client executes an application in which collaborative editing can be performed or participates in a session for collaborative editing, the processor 421 may provide the collaborative editing service. Here, the collaborative editing may refer to an operation of collaboratively editing a content shared by the plurality of clients (e.g., the electronic device 401 and the external electronic device 104).

The processor 421 may establish a collaborative editing session and may provide the collaborative editing service to the plurality of clients connected to the collaborative editing session. The processor 421 may manage clients participating in each collaborative editing session. Specifically, the processor 421 may classify and manage each session according to which type of electronic device the client accesses a specific content through which account. For example, when the first to third clients want to participate in collaborative editing of a first content, the processor 421 may generate a first collaborative editing session, and may manage the connection state of the first to third clients accessing the first collaborative editing session. In addition, when the fourth and fifth clients want to participate in collaborative editing of a second content, the processor 421 may generate a second collaborative editing session, and may manage the connection state of the fourth and fifth clients accessing the second collaborative editing session. In this manner, the processor 421 may generate different sessions according to the content to be edited, and may manage collaborative editing for each generated session.

According to another embodiment, in the case of the application-based collaborative editing, the processor 421 may support a collaborative editing service that allows a user and a counterpart who want to participate in the collaborative editing to log in the collaborative editing service and use the collaborative editing service. The plurality of clients (e.g., the electronic device 401 and the external electronic device 104) desiring to participate in the collaborative editing service may be connected to the server 405, and may access the server 405 through a login method of inputting an ID and a password. For example, as the plurality of clients access the server 405, the processor 421 may store information on the clients participating in the collaborative editing in the memory 431. Here, the information on the clients may include user information and identification information of each of the plurality of clients (e.g., the electronic device 401 and the external electronic device 104). In addition, when the plurality of clients (e.g., the electronic device 401 and the external electronic device 104) are connected, the processor 421 may store, in the memory 431, information on an editing content (e.g., information such as the type or version of an electronic document) provided to each of the clients. Such information on the clients may be referred to as metadata.

In a state in which the plurality of clients (e.g., the electronic device 401 and the external electronic device 104) access the collaborative editing session, the processor 421 may receive an editing command for collaborative editing performed by at least one of the plurality of clients participating in the collaborative editing service through the communication module 491. When the at least one client (e.g., the electronic device 401) receives the editing command by creating and editing the corresponding content, a change corresponding to the editing command may be transmitted to all other clients (e.g., the external electronic device 104).

The content to be edited may be a file for editing that the plurality of clients can view, write, and edit collaboratively, and may refer to a document for editing. For example, the editing content is not limited to documents such as notes, word processors, presentations, and spreadsheets, and the types of documents may vary. Such editing content may be referred to as an electronic document or a collaborative document for editing. This editing content may be stored in the server 405 and may be transmitted to the corresponding client upon a request from the client (e.g., the electronic device 401 or the external electronic device 104) participating in the collaborative editing.

The processor 421 may manage the access of the plurality of clients (e.g., the electronic device 401 and the external electronic device 104) participating in the collaborative editing, and may perform an operation of detecting an abnormal connection state during the collaborative editing.

Specifically, the processor 421 may identify at least one disconnected electronic device among the plurality of electronic devices (e.g., the electronic device 401 and the external electronic device 104) connected for collaborative editing. Here, it is assumed that the disconnected electronic device is the electronic device 401. The processor 421 may periodically monitor the connection state through communication with each of the plurality of electronic devices. For example, the processor 421 may monitor whether an abnormal situation such as a timeout or abort occurs in the collaborative editing session.

When at least one disconnected electronic device is identified as a result of monitoring, the processor 421 may be required to identify a time point at which the at least one electronic device is disconnected and may identify a state in which a change according to the editing is applied to the at least one electronic device. Accordingly, in order to manage the disconnected electronic device, the processor 421 may temporarily store metadata of the disconnected electronic device in response to identification of the disconnected electronic device.

As described above, since states to which the changes according to the editing command are applied are different for each electronic device, each of the electronic devices may exchange checkpoints for each connection between the server 405 and the electronic devices for the purpose of indicating the reception progress of the editing commands provided by the server 405.

The checkpoint may refer to an order in which corresponding editing commands are sequentially accumulated and generated so as not to overlap or conflict with editing commands in another electronic device (e.g., the external electronic device 104) whenever editing in the electronic device 401 is performed by the user in order to edit a corresponding document through the collaborative editing service. Such a checkpoint may not simply mean a timestamp indicating the time of the last editing, but may mean the amount of operation of the content edited until just before. For example, when the editing commands by the electronic device 401 and the external electronic device 104 are simultaneously transmitted to the server 405 after initial connection, the checkpoint in each of the electronic devices 401 and 104 may be transmitted along with each editing command. Here, even if the checkpoints are transmitted to the server 405 at the same time, the checkpoint in the electronic device 401 and the checkpoint in the external electronic device 404 may be different from each other. That is, the amount of change indicating the content edited by the user in the electronic device 401 until just before may be different from the amount of change indicating the content edited by another user in the external electronic device 104 until just before. These checkpoints may be sequentially updated by the processor 421 in response to the reception of the editing commands by the connected electronic devices, and when the editing command is transmitted to all the electronic devices, the updated checkpoint may be transmitted together. When such a checkpoint is used, synchronization between the electronic devices 401 and 104 connected to the server 405 may be possible.

Accordingly, when the disconnected electronic device 401 is identified among the plurality of connected electronic devices for collaborative editing, the processor 421 may identify a first checkpoint associated with a time point when the connection of the electronic device 401 is cut off. For example, since all the electronic devices notify the server 405 of their checkpoints whenever they connect to the server 405, if it is possible to identify which electronic device the disconnected electronic device 401 is, the checkpoint most recently transmitted by the electronic device 401 may be checked. Accordingly, the processor 421 may identify the first checkpoint associated with the time point when the connection of the electronic device 401 is cut off.

Next, the processor 421 may store, in the memory 431, a new editing command for the at least one electronic device obtained by sequentially processing editing commands after the first checkpoint performed by the connected electronic devices among the plurality of electronic devices. Specifically, since the processor 421 can normally receive the editing commands from other connected electronic devices even after the connection of the electronic device 401 is cut off, the processor 421 may transmit the received editing commands to the other electronic devices except for the disconnected electronic device 401. Here, the received editing commands may correspond to editing commands after the first checkpoint. Accordingly, each of the remaining electronic devices may output a collaborative editing screen calculated (or rendered) based on changes according to the editing commands received through the server 405.

On the other hand, for the electronic device 401, the processor 421 may not simply accumulate and store the editing commands after the first checkpoint, but may sequentially process (or merge) the editing commands after the first checkpoint to generate and manage the processed editing commands in the form of a single result. Accordingly, the processor 421 may separately manage and store one new editing command obtained by sequentially processing the editing commands after the first checkpoint, in association with the electronic device 401 in the memory 431.

According to an embodiment, the processor 421 may update a second checkpoint whenever the editing commands after the checkpoint performed by the connected electronic devices among the plurality of electronic devices are sequentially acquired. Here, the second checkpoint is different from the first checkpoint associated with the disconnection time point, and may be incremented by one every time the editing command is received. The processor 421 may transmit the editing commands received together with the updated second checkpoint to other electronic devices except for the disconnected electronic device 401. In this manner, the processor 421 may notify the remaining electronic devices of the updated second checkpoint, that is, the latest checkpoint, so that each of the electronic devices can identify the editing progress, thereby reflecting and outputting the editing details in real time.

In addition, according to an embodiment, the processor 421 may store the updated (or incremented) latest checkpoint for the electronic device 401 as the second checkpoint is updated. The processor 421 may transmit this latest checkpoint to the reconnected electronic device 401 when transmitting the new editing command.

For example, in a case in which the first checkpoint is referred to as "checkpoint 4", when six editing commands are sequentially received from other electronic devices after the first checkpoint, the processor 401 may increment the second checkpoint (checkpoint 5→6→7→8→9→10) by one every time the six editing commands are sequentially acquired. The processor 421 may calculate the six editing commands in the form of one new editing command based on a predetermined arithmetic algorithm, and may store the six editing commands as one new editing command for the electronic device 401 through the calculation. For example, the processor 421 may merge the six editing commands into one editing command form at once by using the checkpoint that is changed while the connection is cut off, and may process the merged six editing commands as one new editing command (or a change). Here, the processor 421 may store the updated (or incremented) latest checkpoint (e.g., checkpoint 10) for the electronic device 401 as the second checkpoint is updated. In addition, the processor 421 may temporarily store the latest checkpoint together with a new editing command in the memory 431 to correspond to the electronic device 401. The processor 421 may store the new editing command in correspondence with the metadata of the electronic device 401 to correspond to the electronic device 401.

As described above, according to an embodiment, periodically or whenever the editing command is received from other electronic devices before the electronic device 401 is reconnected, the processor 421 may perform an operation of generating the editing commands into a single editing command through calculation. Next, when the electronic device 401 is reconnected, the processor 421 may transmit the new editing command stored and managed for the electronic device 401 to the reconnected electronic device 401, thereby performing synchronization during collaborative editing. For example, when reconnecting with the electronic device 401, the processor 421 may transmit the new editing command corresponding to the latest checkpoint stored for the electronic device 401 to the electronic device 401.

The processor 421 may acquire a current checkpoint in the electronic device 401 upon reconnection. Since the electronic device 401 is disconnected after the first checkpoint (e.g., checkpoint 4), the current checkpoint may be the same as the first checkpoint (e.g., checkpoint 4). Accordingly, the processor 421 may transmit the new editing command to the electronic device 401 through the communication module 491 based on the acquired current checkpoint and the first checkpoint.

After transmitting the new editing command, the processor 421 may delete the new editing command for the electronic device 401 stored in the memory 431. In this manner, the processor 421 may perform an operation of pre-calculating the editing commands during the disconnection only when the disconnected electronic device 401 is identified, and may delete the data calculated for the electronic device 401 when communication is restored, thereby efficiently utilizing resources in the server 405 that manages collaborative editing for a plurality of electronic devices.

The processor 421 may acquire the current checkpoint in the electronic device 401 from the electronic device 401 upon reconnection of the electronic device 401, and may also acquire the current checkpoint in each electronic device that has transmitted the editing command, together with the editing commands when the editing commands are received by the connected electronic devices.

Accordingly, the processor 421 may determine the current checkpoint received along with every editing command to determine the progress state of the changes according to the editing applied to the at least one electronic device, thereby providing the editing command corresponding to each connected electronic device.

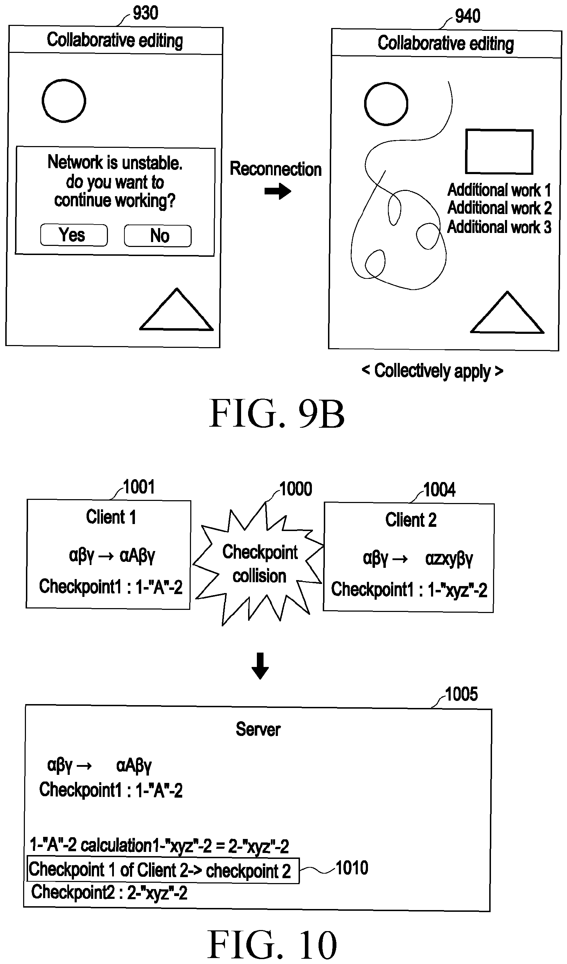

In the case of a collaborative editing environment, a situation in which two or more editing commands are simultaneously input for one content by the plurality of electronic devices may occur. As described above, when the changes according to the two or more editing commands need to be applied to a point overlapping the content, it is necessary to adjust the editing commands so that they do not collide with each other. Accordingly, the processor 421 may identify whether the received editing commands collide with each other when the editing commands are received by the plurality of electronic devices, and may sequentially select the editing commands in which the collision occurs when the collision occurs. For example, the processor 421 may select and process any one of the editing commands in which the collision occurs based on their priorities, and may then sequentially process the remaining editing commands. Next, the processor 421 may update the second checkpoint according to the reception of the editing command according to the sequential selection, and may notify the remaining electronic devices except for the at least one disconnected electronic device of the updated second checkpoint. An operation of the server 405 during such a collision will be described later with reference to FIG. 10.

The memory 431 may include information necessary to perform an operation for providing a collaborative editing service and one or more modules for performing a part of the operation. In addition, the memory 431 may store information related to the plurality of clients participating in the collaborative editing, and may temporarily store information related to clients temporarily disconnected during the participation. In addition, the memory 431 may store an arithmetic algorithm for generating the editing commands generated after the disconnection into one result on behalf of the disconnected client. Based on this calculation algorithm, when there are a plurality of disconnected clients, the processor 421 may temporarily store the results in different forms for each client, even if the time at which the connection is cut off is different for each client.

Meanwhile, referring to the operation of the electronic device 401, the processor 420 may control the memory 430, the display 460, and the communication module 491 which are connected to the processor 420. The electronic device 401 may be the electronic device 101 described above with reference to FIG. 1, and a detailed description thereof will be omitted.

However, the processor 420 according to an embodiment may control access to the collaborative editing session opened by the server 405 through the communication module 490.

According to an embodiment, the memory 430 may include a command buffer 433 for sequentially and temporarily storing editing commands provided from the server 405 while connected to the collaborative editing session. In addition, the current checkpoint may be transmitted to the server 405 every time the server 405 is connected. When the editing command is received from the server 405, the processor 420 may acquire the checkpoint together with the received editing command, and may update the current checkpoint by reflecting the processing result of the editing command. For example, when it is assumed that the current checkpoint transmitted to the server 405 last before the connection is cut off from the processor 420 is the first checkpoint (e.g., checkpoint 4) and the editing command received after reconnection, that is, the checkpoint acquired along with the new editing command, is the updated second checkpoint (e.g. checkpoint 10), the processor 420 may update and store the current checkpoint as "checkpoint 10".

As described above, since the processor 420 needs to perform calculation (or rendering) only once by acquiring the new editing command, quick synchronization can be performed, and accordingly, the display 460 may display a collaborative editing screen in which the changes are quickly reflected through the rendering. For example, the collaborative editing screen may be a screen for displaying editing details according to editing commands at a time, or a screen for displaying the editing details as one result in a snapshot format.

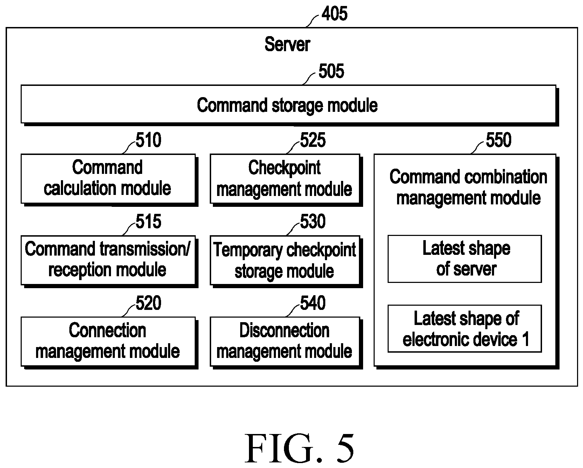

Meanwhile, according to certain embodiments, the memory 431 in the server 405 may include information necessary to perform the operation for providing the collaborative editing service and one or more modules for performing a part of the operation, and the modules may be configured as illustrated in FIG. 5. In addition, the memory 431 in the electronic device 401 may include at least one module similar to that illustrated in FIG. 5.

FIG. 5 is a detailed block diagram illustrating an operation of a server for providing a collaborative editing service according to certain embodiments.

Referring to FIG. 5, according to certain embodiments, the server 405 may include a command storage module 505, a command operation module 510, a command transmission/reception module 515, a connection management module 520, and a checkpoint management module 525. According to an embodiment, the server 405 may further include a temporary checkpoint storage module 530, a disconnection management module 540, and a command combination management module 550 to manage an electronic device that is temporarily disconnected while providing a collaborative editing service. In addition, according to an embodiment, similarly to the server 405, the electronic device 401 may include a command storage module (not shown), a command operation module (not shown), a command transmission/reception module (not shown), and a checkpoint management module (not shown), and may further include a screen output module (not shown) for outputting a collaborative editing screen.

The command storage module 505 may sequentially store editing commands from electronic devices participating in collaborative editing.

The command operation module 510 may perform an operation for transmitting received editing commands to all other electronic devices.

The command transmission/reception module 515 may receive the editing commands from the electronic devices or may notify another electronic device of a change according to the editing command. For example, the received editing command and a checkpoint updated according to the reception of the editing command may be transmitted.

The connection management module 520 may manage the connection of a plurality of electronic devices to a collaborative editing session, such as establishing a plurality of client/server connections with a corresponding plurality of electronic devices. For example, the connection management module 520 may manage the connection of the electronic devices for each collaborative editing session, and accordingly manage which type of electronic device access which content for collaborative editing through which account.

The checkpoint management module 525 may record and manage a checkpoint for each electronic device.

Meanwhile, as a module for managing the electronic device temporarily disconnected while providing the collaborative editing service, the server 405 may further include a temporary checkpoint storage module 530, a disconnection management module 540, and a command combination management module 550.

The temporary checkpoint storage module 530 may temporarily store a checkpoint that is a reference for pre-calculating the editing commands after the disconnection time point. For example, the temporary checkpoint storage module 530 may update and store a second checkpoint as the editing command is received from another electronic device after a first checkpoint associated with a time point at which the connection of the electronic device 401 is cut off.

The disconnection management module 540 may identify at least one disconnected electronic device. For example, the connection management module 520 may identify whether a connection release event of at least one electronic device among the plurality of electronic devices that is accessing the collaborative editing session occurs, and may notify the disconnection management module 540 of the occurrence of a connection release event. In addition, the connection management module 520 may notify the disconnection management module 540 of the connection resumption of the disconnected electronic device. Since information on the electronic devices participating in the collaborative editing session is already acquired when the session is opened, information on the disconnected electronic device among the electronic devices, for example, metadata may be temporarily stored. For example, the metadata may include at least one of user information associated with the disconnected electronic device, identification information of the electronic device, or information on a content being collaborative edited. The disconnection management module 540 may provide the temporarily stored metadata to the command combination management module 550. The transmission of the metadata may serve to trigger the command combination management module 550 to pre-calculate only the editing commands while the connection to the electronic device 401 is cut in the form of one editing command.

Meanwhile, the command combination management module 550 may have the latest result (e.g., the latest shape of the server) by sequentially calculating the editing commands from all electronic devices participating in the collaborative editing. In addition, only when the disconnected electronic device 401 is identified, the command combination management module 550 may perform an operation of pre-calculating the editing commands during the disconnection and may store this. For example, the command combination management module 550 may recognize the electronic device 401 disconnected by the disconnection management module 540, and may determine the checkpoint of the electronic device 401 temporarily stored in the temporary checkpoint storage module 530. Accordingly, the command combination management module 550 may retrieve the editing commands after the determined checkpoint among the editing commands sequentially stored in the command storage module 505. The command combination management module 550 may calculate the editing commands using the command calculation module 510. The command combination management module 550 may store one result generated through sequential calculation in correspondence with the electronic device 401. When there are a plurality of disconnected electronic devices, the command combination management module 550 may store a new editing command for each electronic device. In other words, since the disconnection time point for each electronic device may be different, the new editing command stored for each electronic device may also be different from each other. The new editing command may be stored in a unit corresponding to one content for each electronic device. For example, when collaborative editing is performed using a note application, the new editing command may refer to one note displayed on one screen.

Even after storing the new editing command, the command combination management module 550 may perform an operation of reflecting and calculating additional editing commands to the new editing command whenever the sequential editing command is received or periodically. In this manner, the sequential calculation is not performed only once, but the command combination management module 550 may continuously reflect and calculate additional editing commands from other electronic devices until the connection with the disconnected electronic device 401 is resumed.

Meanwhile, the disconnection management module 540 may confirm whether the electronic device 401 is reconnected through monitoring. When the reconnection is confirmed, the disconnection management module 540 may retrieve a previously calculated new editing command (e.g., the latest shape of the electronic device 1) from the command combination management module 550 and may transmit the retrieved new editing command to the electronic device 401 through the command transmission/reception module 515.

Next, when the new editing command is successfully transmitted to the electronic device 401, the command combination management module 550 may delete the new editing command calculated for the electronic device 401 in response to a request from the disconnection management module 540. In addition, since it is no longer necessary to manage information on the electronic device 401, the disconnection management module 540 may delete temporarily stored metadata. Accordingly, when the connection is resumed, all data related to the electronic device 401, for example, the new editing command and the metadata may be collectively deleted, thereby efficiently utilizing the resources in the server 405 that manages collaborative editing for the plurality of electronic devices.

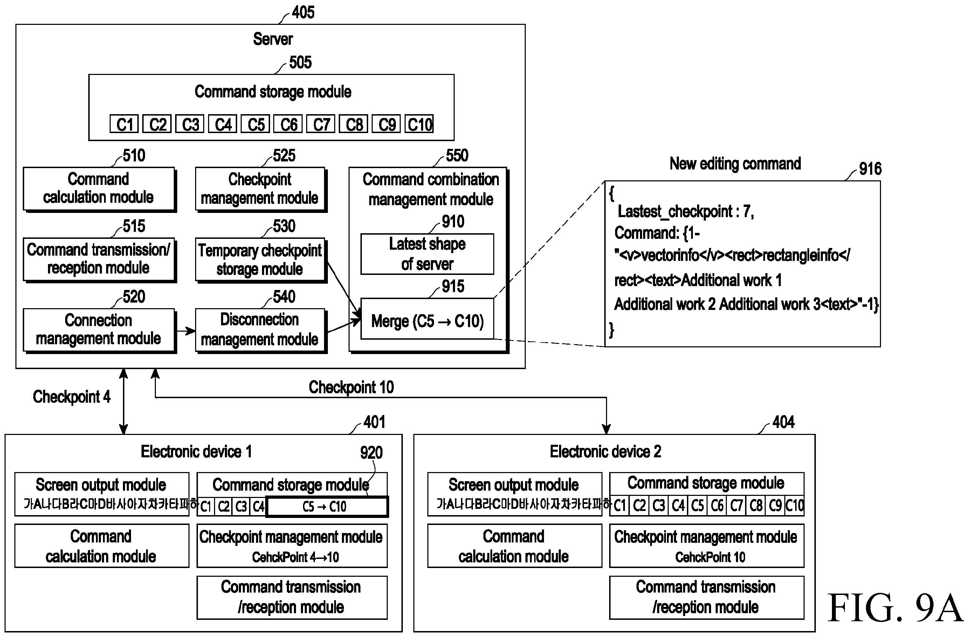

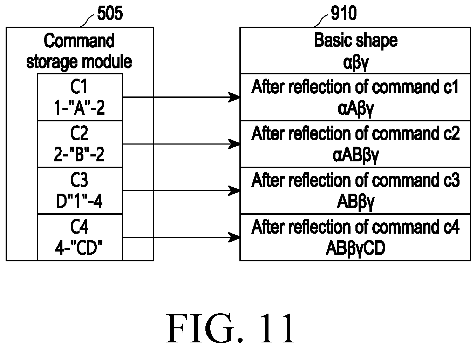

Meanwhile, in addition to the above description, specific operations in each of the command storage module 505, the command operation module 510, the command transmission/reception module 515, and the checkpoint management module 525 will be described later. For example, operations in the command transmission/reception module 515 and the checkpoint management module 525 will be described later with reference to FIG. 9A, operations in the command operation module 510 will be described later with reference to FIG. 10, and operations in the command storage module 505 will be described later with reference to FIG. 11.

According to certain embodiments, the server 405 may include communication circuitry(e.g., a communication module 491), a memory 431, and at least one processor 421, wherein the at least one processor 421 may be configured to connect with a plurality of electronic devices for collaborative editing, identify at least one electronic device (e.g., the electronic device 401 of FIG. 4) disconnected from the server among a plurality of connected electronic devices, to identify a first checkpoint associated with a time point at which the at least one electronic device is disconnected, to store a new editing command acquired by sequentially processing editing commands received from the connected electronic devices among the plurality of electronic devices after the first checkpoint, in the memory 431, and in response to the at least one electronic device being reconnected, to transmit the new editing command to the at least one electronic device through the communication circuitry.

According to certain embodiments, the at least one processor may be configured to delete the new editing command stored in the memory after transmitting the new editing command.

According to certain embodiments, the at least one processor may be configured to identify a second checkpoint whenever acquiring an editing command received from the connected electronic devices among the plurality of electronic devices after the first checkpoint, and to store the second checkpoint as the latest checkpoint, with respect to the at least one electronic device.

According to certain embodiments, the at least one processor may be configured to, in response to the at least one electronic device being reconnected, transmit the new editing command and the second checkpoint to the at least one electronic device through the communication circuitry.

According to certain embodiments, the at least one processor may be configured to, in response to the at least one electronic device being reconnected, acquire a third checkpoint of the at least one electronic device from the at least one electronic device, and to transmit the new editing command to the at least one electronic device through the communication circuitry based on the acquired third checkpoint and the first checkpoint.

According to certain embodiments, the at least one processor may be configured to transmit the received editing command to the connected electronic devices except for the at least one electronic device being disconnected through the communication circuitry.

According to certain embodiments, whenever the editing command is received from the connected electronic devices among the plurality of electronic devices, the at least one processor may be configured to identify the lastest checkpoint, and transmit the received editing command together with the latest checkpoint to the connected electronic devices except for the at least one electronic device being disconnected through the communication circuitry.

According to certain embodiments, the at least one processor may be configured to acquire, together with the editing command, a fourth checkpoint in each electronic device that has transmitted the editing command when the editing command is received from the connected electronic devices.

According to certain embodiments, the at least one processor may be configured to identify, when the editing command is received from the connected electronic devices, whether the received editing commands collide with each other, to sequentially select, when the collision occurs, editing commands in which the collision occurs, and to identify the second checkpoint according to the sequential selection to notify the connected electronic devices except for the at least one electronic device being disconnected.

According to certain embodiments, the at least one processor may be configured to temporarily store metadata of the at least one electronic device in response to identifying of the at least one electronic device being disconnected.

According to certain embodiments, the at least one processor may be configured to store, in the memory, the new editing command for the at least one electronic device being disconnected to correspond to the metadata of the at least one electronic device.

According to certain embodiments, the server 405 may include communication circuitry(e.g., a communication module 491), a memory 431, and at least one processor 421, wherein the at least one processor 421 may be configured to establish a plurality of client/server connections with a corresponding plurality of electronic devices, detect disconnection of one of the plurality of client/server connections with a disconnected device (e.g., the electronic device 401 of FIG. 4) of the corresponding plurality of connected electronic devices, to identify a first checkpoint associated with a time when the at disconnection of the one of the plurality of client/server connections occurs, store at least one new editing command acquired by sequentially processing editing commands received from remaining ones of the plurality of client/server connections corresponding to remaining ones of the corresponding plurality of electronic devices in the memory 431, and in response to reconnection of the one of the plurality of client/server connections, transmit the at least one new editing command to the disconnected device.

According to certain embodiments, the at least one processor may be further configured to delete the at least one new editing command stored in the memory after transmitting the at least one new editing command.

According to certain embodiments, the at least one processor may be further configured to identify a second checkpoint whenever acquiring at least one second editing command received from the remaining ones of the corresponding plurality of electronic devices after the first checkpoint, and to store the second checkpoint as a latest checkpoint, with respect to the disconnected device.

According to certain embodiments, the at least one processor may be further configured to, in response to the disconnected device being reconnected, transmit a new editing command and the latest checkpoint to the disconnected device.

According to certain embodiments, the at least one processor may be further configured to, in response to the disconnected device being reconnected, acquire a third checkpoint of the disconnected device from the disconnected device, and to transmit the new editing command to the disconnected device through the communication circuitry based on the acquired third checkpoint and the first checkpoint.

According to certain embodiments, the at least one processor may be further configured to transmit the received editing command to the remaining ones of the corresponding plurality of electronic devices.

According to certain embodiments, whenever the editing command is received from the remaining ones of the corresponding plurality of electronic devices, the at least one processor may be further configured to identify the latest checkpoint, and transmit the received editing command together with the latest checkpoint to the remaining ones of the corresponding plurality of electronic devices.

According to certain embodiments, the at least one processor may be further configured to acquire, together with the editing command, a fourth checkpoint in each one of the corresponding plurality of electronic devices that have transmitted the editing command when the editing command is received from the remaining ones of the corresponding plurality of electronic devices. According to certain embodiments, the at least one processor may be further configured to identify, when the editing command is received from the remaining ones of the corresponding ones of the plurality of electronic devices, whether the received editing commands collide with each other, when a collision occurs, sequentially select the editing commands that collide with each other, and to identify the second checkpoint according to the sequential selection to notify remaining ones of the corresponding plurality of the electronic devices.

According to certain embodiments, the at least one processor may be further configured to temporarily store metadata of the disconnected device in response to identifying that the disconnected device is disconnected.

According to certain embodiments, the at least one processor may be further configured to store, in the memory, the new editing command for the disconnected device to correspond to the metadata of the disconnected device.

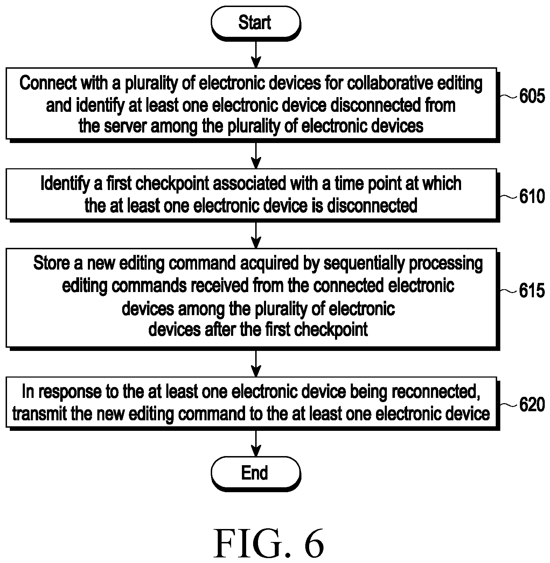

FIG. 6 is a flowchart illustrating an operation in a server for providing a collaborative editing service according to certain embodiments.

Each step/operation of the operating method of FIG. 6 may be performed by at least one server (e.g., the server 108 of FIG. 1 or the server 405 of FIG. 4, or at least one processor {e.g., the processor 421 of FIG. 4} of the server). In an embodiment, at least one of operations 605 to 620 may be omitted, the order of some operations may be changed, or another operation may be added. In addition, in the following embodiments, respective operations may be sequentially performed, but are not necessarily performed sequentially. For example, the order of the respective operations may be changed, and at least two operations may be performed in parallel.

Referring to FIG. 6, in operation 605, the server (e.g., the server 405 of FIG. 4) may connect with a plurality of electronic devices for collaborative editing and identify at least one electronic device (e.g., the electronic device 401 of FIG. 4) disconnected from the server among a plurality of electronic devices. That is, the server (405) can establish a plurality of client/server connections with a corresponding plurality of electronic devices.

In operation 610, the server 405 may identify a first checkpoint associated with a time point at which the at least one electronic device is disconnected. That is, the server 405 can detect disconnection of one of the plurality of client/server connections with a disconnected device of the corresponding plurality of electronic devices.

In operation 615, the server 405 may store a new editing command acquired by sequentially processing editing commands received from the connected electronic devices among the plurality of electronic devices after the first checkpoint. That is, the server 405 can store at least one new editing command acquired by sequentially processing editing commands received from remaining ones of the plurality of client/server connections corresponding to remaining ones of the corresponding plurality of electronic devices.

In operation 620, the server 405 may transmit the new editing command to the at least one electronic device in response to the at least one electronic device being reconnected. That is, in response to reconnection of the one of the plurality of client/server connections, the server 405 can transmit the at least one new editing command to the disconnected device.

According to certain embodiments, the method may further include deleting the stored new editing command after transmitting the new editing command.

According to certain embodiments, the method may further include identifying a second checkpoint whenever acquiring an editing command received from the connected electronic devices among the plurality of electronic devices, and to store the second checkpoint as the latest checkpoint with respect to the at least one electronic device.

According to certain embodiments, the transmitting of the new editing command to the at least one electronic device may include transmitting the new editing command and the latest checkpoint to the at least one electronic device in response to the at least one electronic device being reconnected.

According to certain embodiments, the transmitting of the new editing command to the at least one electronic device may include acquiring a third checkpoint of the at least one electronic device from the at least one electronic device in response to the at least one electronic device being reconnected, and to transmitting the new editing command to the at least one electronic device based on the acquired third checkpoint and the first checkpoint.

According to certain embodiments, the method may further include identifying the latest checkpoint whenever an editing command is received from the connected electronic devices among the plurality of electronic devices, and transmitting the received editing command together with the latest checkpoint to the connected electronic devices except for the at least one disconnected electronic device being disconnected.

According to certain embodiments, the method may further include acquiring a fourth checkpoint in each electronic device that has transmitted the editing command together with the editing command when the editing command is received from the connected electronic devices.

According to certain embodiments, the method may further include identifying whether the received editing commands collide with each other when the editing command is received from the connected electronic devices, sequentially selecting, when the collision occurs, the editing commands in which the collision occurs, and identifying the second checkpoint according to the sequential selection to notify the connected electronic devices except for the at least one electronic device being disconnected.

According to certain embodiments, the storing of the new editing command for the at least one electronic device may further include temporarily storing metadata of the at least one electronic device in response to identifying of the at least one electronic device being disconnected, and storing the new editing command for the at least one electronic device being disconnected to correspond to the metadata of the at least one electronic device.

According to certain embodiments, the method may further include identifying a second checkpoint whenever acquiring at least one editing command received from the remaining ones of the corresponding plurality of electronic devices, and to store the second checkpoint as the latest checkpoint with respect to the disconnected device.

According to certain embodiments, the transmitting of the new editing command to the disconnected device may include transmitting the new editing command and the latest checkpoint to the disconnected device in response to the at least one electronic device being reconnected.

According to certain embodiments, the transmitting of the new editing command to disconnected device may include acquiring a third checkpoint of the disconnected device from the disconnected device in response to the disconnected device being reconnected, and to transmitting the new editing command to the disconnected device based on the acquired third checkpoint and the first checkpoint.

According to certain embodiments, the method may further include identifying the latest checkpoint whenever an editing command is received from the remaining ones of the corresponding plurality of electronic devices, and transmitting the received editing command together with the latest checkpoint to the remaining ones of the corresponding plurality of electronic devices.

According to certain embodiments, the method may further include acquiring a fourth checkpoint in each one of the corresponding plurality of electronic devices that have transmitted the editing command together with the editing command.

According to certain embodiments, the method may further include identifying whether the received editing commands collide with each other when the editing command is received from the remaining ones of the corresponding electronic devices, when a collision occurs, sequentially selecting the editing commands that collide with each other, and identifying a second checkpoint according to a sequential selection to notify the remaining ones of the corresponding plurality of electronic devices.

According to certain embodiments, storing of the new editing command for the disconnected device may further include temporarily storing metadata of the disconnected device in response to identifying that the disconnected device is disconnected, and storing the new editing command for the disconnected device being disconnected to correspond to the metadata of the disconnected device.

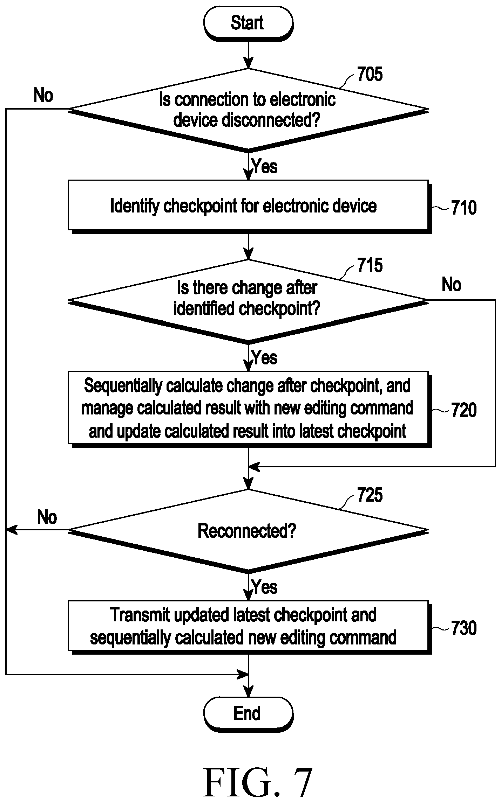

FIG. 7 is a flowchart illustrating an operation in a server when a connection with an electronic device is disconnected and reconnected according to certain embodiments. In FIG. 7, a state in which a plurality of electronic devices are connected to a collaborative editing session will be described as an example. In addition, for convenience of description in FIG. 7, description will be made with reference to FIG. 9A. FIG. 9A is a diagram illustrating an operation between a server and an electronic device when a connection is resumed according to certain embodiments.

Referring to FIG. 7, in operation 750, the server 405 may identify whether a connection with the electronic device 401 among a plurality of electronic devices is disconnected.

In operation 710, in response to identification of disconnection with the electronic device 401, the server 405 may identify a checkpoint for the electronic device 401. For example, all the electronic devices may notify the server 405 of a checkpoint in each electronic device whenever they access the server 405. Accordingly, since the server 405 identifies the disconnected electronic device 401 by monitoring a collaborative editing session and determines what kind of electronic device the identified electronic device 401 is, it is possible to determine the most recently sent checkpoint. Accordingly, the server 405 may identify a checkpoint associated with a time point at which the connection of the electronic device 401 is disconnected.

Referring to FIG. 9A, when it is assumed that a checkpoint provided to the server 405 before the disconnection from the electronic device 401 is "checkpoint 4", only editing commands (e.g., C1, C2, C3, and C4) before the disconnection may be stored in the command storage module in the electronic device 401. When the server 405 identifies that the connection of the electronic device 401 is disconnected, the server 405 may confirm that the checkpoint of the disconnected electronic device 401 is "checkpoint 4".

In operation 715, the server 405 may identify whether there are any change since the identified checkpoint. For example, referring to FIG. 9A, as six editing commands are sequentially received from another electronic device (e.g., the electronic device 2 404) after the checkpoint "checkpoint 4" associated with the disconnection time point, the server 405 may acquire "checkpoint 10", that is, a current checkpoint of the electronic device 2 404 together with the sequential editing commands. Accordingly, the server 405 may increment the checkpoint (checkpoint 5→6→7→8→9→10) by one in the server 405 whenever the six editing commands are sequentially acquired.

In operation 720, when there are the changes after the identified checkpoint, the server 405 may sequentially calculate the changes after the checkpoint, and may manage the calculated result with a new editing command 915 and update the calculated result into the latest checkpoint. In addition, the server 405 may have the latest result (e.g., the latest shape of the server) 910 by sequentially calculating the six editing commands. For example, referring to FIG. 9A, the server 405 may calculate the six editing commands in a manner to combine the six editing commands into one based on a predetermined arithmetic algorithm, and may store the calculated result as a single new editing command 915 for the electronic device 401 through the calculation. Here, as the server 405 increments and updates the checkpoint in the server 405 by one each time the editing command is received, the updated (or incremented) latest checkpoint (e.g., checkpoint 10) for the electronic device 401 may be stored.

In operation 725, the server 405 may identify whether to be reconnected with the electronic device 401. In operation 730, in response to the identification of the reconnection, the server 405 may transmit the updated latest checkpoint and the sequentially calculated new editing command 916 to the reconnected electronic device 401. Accordingly, since the new editing command 920 is stored in the form of one result in the command storage module of the electronic device 401, the change by one such new editing command may be quickly reflected.

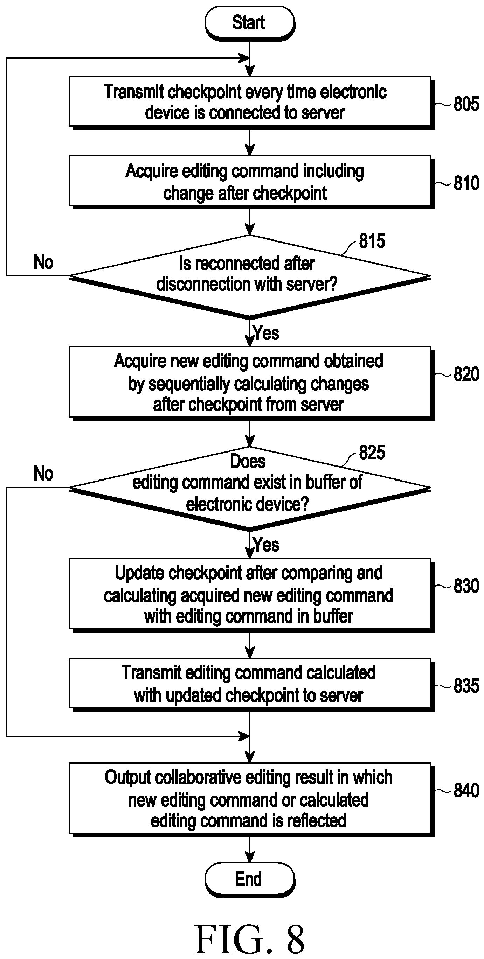

FIG. 8 is a flowchart illustrating an operation in an electronic device upon disconnection and reconnection with a server according to certain embodiments. In addition, for convenience of description in FIG. 8, description will be made with reference to FIG. 9B. FIG. 9B is a diagram illustrating an exemplary output screen of an electronic device when a connection is resumed according to certain embodiments.

In operation 805, the electronic device 401 may transmit a checkpoint every time the electronic device 401 is connected to the server 405. In operation 810, the electronic device 401 may acquire an editing command including a change after the checkpoint from the server 405. For example, the electronic device 401 may receive an editing command by another electronic device 404 through the server 405 during collaborative editing, may reflect the received editing command on a collaborative editing screen, and may then update the checkpoint into the latest checkpoint. In this way, the electronic device 401 may notify the server 405 of the latest checkpoint, i.e., the current checkpoint, of the electronic device 401 for synchronization when the electronic device 401 is connected to the server 405, so that it is possible to acquire the editing command after the current checkpoint. As described above, while the electronic device 401 is connected to the server 405, the editing command from the electronic device 401 may be transmitted, and the editing command performed by another electronic device may be acquired from the server 405. However, when the connection to the server 405 is temporarily cut off, the editing command from the electronic device 401 cannot be transmitted to the server 405 and the editing command performed by the other electronic device cannot be acquired, so that the operation for processing the editing command may be stopped.

In operation 815, the electronic device 401 may identify whether the connection to the server 405 is reconnected after the disconnection. When reconnection occurs, in operation 820, the electronic device 401 may acquire, from the server 405, a new editing command obtained by sequentially calculating changes after the checkpoint. Here, upon reconnection, the electronic device 401 may acquire the latest checkpoint together with the new editing command, and the acquired checkpoint and the new editing command may be stored in the command storage module at once. On the other hand, when the disconnection does not occur, the above-described operation may be repeatedly performed.

In operation 825, when receiving the new editing command from the server 405, the electronic device 401 may identify whether the editing command exists in a buffer of the electronic device 401. For example, editing in the electronic device 401 may be performed by the user in a situation in which the connection to the server 405 is temporarily cut off. In this case, although the editing command in the electronic device 401 is not transmitted to the server 405, there may be the editing command that has not been transmitted to the server 405 in the buffer.

In operation 830, in response to a case in which the editing command exists in the buffer, the electronic device 401 may compare the acquired new editing command with the editing command in the buffer, and may perform checkpoint update after the calculation. On the other hand, when the editing command does not exist in the buffer, the electronic device 401 may perform operation 840.

In operation 835, the electronic device 401 may transmit the updated checkpoint and the calculated editing command to the server 405, and in operation 840, the electronic device 401 may output a collaborative editing result in which the new editing command or the calculated editing command are reflected. For example, as illustrated in FIG. 9B, when the connection is temporarily disconnected, the electronic device 401 may output a notification of the disconnection on the collaborative editing screen 930, and may display the collaborative editing screen 940 in which the new editing command corresponding to the latest checkpoint is reflected at a time upon reconnection. For example, as illustrated in FIG. 9B, the collaborative editing screen in which the new editing command is reflected may be a screen displaying editing details according to the editing command at a time or a screen displaying the editing details in the form of a snapshot as one result.

FIG. 10 is a diagram illustrating an operation in a server when an edit command conflicts according to certain embodiments.

Referring to FIG. 10, in the case of a collaborative editing environment, a situation in which two or more editing commands having the same checkpoint for one content are simultaneously input by a plurality of electronic devices may occur. Accordingly, when editing commands having the same checkpoint are repeatedly received, it is necessary to adjust the editing commands so that they do not collide with each other.

To this end, the command calculation module 510 in the server 405 may perform an operation of adjusting the order of the editing commands in which a collision occurs. Referring to FIG. 10, the command operation module 510 may identify whether received editing commands 1001 and 1004 collide with each other when the editing commands 1001 and 1004 are received by a plurality of electronic devices (e.g., Client 1 and Client 2), and may sequentially select the editing commands in which the collision occurs when the collision occurs in 1000.

For example, referring to FIG. 10, the command calculation module 510 may maintain a checkpoint for the editing command that has been first received based on the server 405 time when sequentially selecting the editing commands in which the collision occurs and may change a checkpoint for the editing command that has been received later.

Here, as illustrated in FIG. 10, it is assumed that the shape of Client 1 and the shape of Client 2 match a shape of "αβγ". Under this premise, there may be a situation in which Client 1 and Client 2 are requesting for a change of the current checkpoint from checkpoint 0 to checkpoint 1 in a manner such that Client 1 changes the shape to "αAβγ", and Client 2 changes the shape to "αxyzβγ". In response to this, the command calculation module 510 of the server 405 may adjust the order of the editing commands, and may correct an actual command calculation value through such adjustment.

Accordingly, assuming that the editing command from Client 1 precedes the editing command from Client 2, an editing command (1-"A"-2) (e.g., a "αAβγ" shape) of checkpoint 1 of Client 1 may be first stored in the command storage module 505, and the corresponding checkpoint may be updated into checkpoint 1 obtained by incrementing checkpoint 0 by one in response to the storage of the editing command, and the updated checkpoint may be stored. Next, an editing command (1-"xyz"-2)(e.g., a "αxyz" shape) corresponding to checkpoint 1 of Client 2 may collide with checkpoint 1 of Client 1 considered to have been received earlier. Accordingly, the command calculation module 510 may perform an operation of changing checkpoint 0, that is, the current checkpoint to checkpoint 2 in 1010 instead of changing checkpoint 0 to checkpoint 1, and may then additionally calculate the editing command of Client 2.

According to an embodiment, the types of calculation algorithms used in the command calculation module 510 may be various, and there may be no restrictions on the types. For example, when the calculation algorithm of an operational transforming method is described as an example, it is recognized that an "A" value of 1-"A"-2, which is a change command value of checkpoint 1, is additionally input, and a preceding value of 1 of 1-"xyz"-2 may be calculated and processed as 2 obtained by adding 1, which is the length of "A".

Next, the command calculation module 510 may pass "xyz" without separate operation processing on "xyz" because "xyz" corresponds to addition of a character, and may then does not perform separate operation processing after confirming that a value of 2 is the same as 2 of checkpoint 1, so that it is possible to confirm that the value of checkpoint 2 is finally calculated as 2-"xyz"-2. The checkpoint adjusted through the above-described collision reconciliation process in 1005 may be notified to all electronic devices so that all the electronic devices participating in the collaborative editing may know the adjusted checkpoint.

FIG. 11 is a diagram illustrating a method of storing a command in a server according to certain embodiments. The operation in FIG. 11 may be performed by the command storage module 505 in the server 405.

Referring to FIG. 11, the command storage module 505 may serve to assign a sequence number to editing commands received by the server 405 using a checkpoint and sequentially store the editing commands. The editing commands may briefly include a number representing the length of a document, a character to be added, and a number to be deleted. The command storage module 505 may store the editing commands in the form of a correction command for correcting the content of an electronic document for editing, a deletion command for deleting objects inserted in the document such as text, images, or tables, and an addition command for adding the objects to the document. For example, based on the operational transforming arithmetic algorithm, a case in which a basic shape, that is, the content in an original document, for example, "αβγδεζηθ 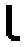 κλµνξ" is edited to "αβγδεζηθ 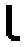 κλµνξ" will be described as an example.

The command storage module 505 may store all data in a form such as "αβγδεζηθ 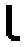 κλµνξ" in the form of a simple command such as 1-"A"-13 instead of processing all data. For example, in the command such as 1-"A"-13, there is one piece of data (e.g. "α") before "A" and 13 pieces of data (e.g., "βγδεζηθ 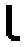 κλµνξ") after "A".

Referring to FIG. 11, in a command C1 (e.g. 1-"A"-2) in the command storage module 505, one piece of data (e.g., "α") exists before "A" and two pieces of data (e.g., "βγ") exist after "A". Here, when the command C1 is reflected in the basic shape "αβγ", a basic shape such as "αAβγ" may be derived. In a command C2 (e.g., 2-"B"-2), two pieces of data (e.g., "αA") exist before "B" and two pieces of data (e.g., "βγ") exist after "B", and a basic shape such as "αABβγ" may be derived when the command C2 is reflected to the command C1. In a command C3 (e.g., D"1"4), a first character (e.g., "α") is deleted and the subsequent four pieces of data (e.g., "ABβγ") exist, so that a basic shape "ABβγ" may be derived when the command C3 is reflected to the command C2. In a command C4 (e.g., 4-"CD"), four pieces of data exist before "CD", so that a basic shape such as "ABβγCD" may be derived when the command C4 is reflected in the command C3.

As described above, the simple command form used in the server 405 may be used to efficiently utilize the storage space in the command storage module 505, and since there is no weight due to the calculation of other editing commands, fast processing may be performed. Accordingly, by sequentially calculating the commands of the command storage module 505 in the basic shape, a new form, i.e., a command from which a new shape can be derived may be stored for the electronic device 401.

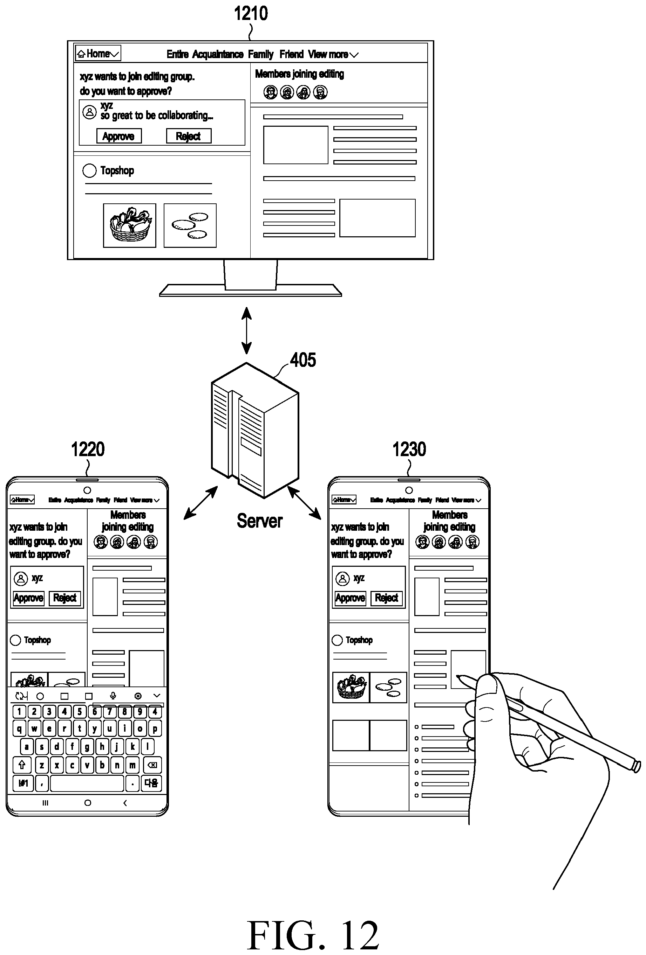

FIG. 12 is a diagram illustrating an exemplary screen during collaborative editing in each electronic device according to certain embodiments of the present disclosure.

FIG. 12 illustrates an editing screen which is currently worked in a collaborative manner in different types of electronic devices 1210, 1220, and 1230. As illustrated in FIG. 12, a collaborative editing screen may be provided on each of the electronic devices 1210, 1220, and 1230. For example, the collaborative editing screen may refer to a screen for editing the same electronic document, and the collaborative editing screen itself displayed on each electronic device 1210, 1220, 1230 may not be displayed according to the size or configuration method of the display. That, the screen may appear differently on different devices. For example, a computer might display the screen differently from portable devices.

The user of at least one electronic device among the plurality of electronic devices 1210, 1220, and 1230 participating in collaborative editing may edit the content displayed on the collaborative editing screen by using an input means (e.g., a keyboard or a stylus pen). For example, through editing of various types of contents including text, images, and moving pictures, the user may correct the content or may delete or add objects such as text, images, and tables inserted therein. The editing command corresponding to the editing may be transmitted to all other electronic devices through the server 405, and each electronic device receiving the editing command may reflect a change corresponding to the editing command on the collaborative editing screen. Accordingly, the content displayed on the plurality of electronic devices participating in the collaborative editing may always be maintained in the same editing state.

In particular, even if communication is temporarily delayed or a disconnected electronic device is identified, e.g., electronic device 1220, the server 405 may periodically calculate changes generated by editing commands by other users that occur during disconnection at the server 405 on behalf of the disconnected electronic device 1220 or whenever the editing command occurs, thereby storing and managing the calculated changes as one result in association with the electronic device. Thereafter, when the server 405 is reconnected to the electronic device 1220, the server may provide the individually stored results for the electronic device, so that only newly generated results need to be calculated and outputted in the electronic device at a time, thereby reducing a load due to excessive data processing in the electronic device. As described above, the users of the plurality of electronic devices 1210, 1220, and 1230 may simultaneously edit the same content in real time through the server 405.

The electronic device according to certain embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that certain embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with certain embodiments of the disclosure, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, according to an embodiment, the module may be implemented in a form of an application-specific integrated circuit (ASIC).

Certain embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to certain embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to certain embodiments, each component (e.g., a module or a program) of the above-described components may include a single entity or multiple entities, and some of the multiple entities may be separately disposed in different components. According to certain embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to certain embodiments, operations performed by the module, the program, or another component may be carried out sequentially, in parallel, repeatedly, or heuristically, or one or more of the operations may be executed in a different order or omitted, or one or more other operations may be added.

## Claims

1. A server comprising:
communication circuitry;
a memory; and
at least one processor,
wherein the at least one processor is configured to:
connect with a plurality of electronic devices for collaborative editing;
identify at least one electronic device disconnected from the server among the plurality of electronic devices;
identify a first checkpoint associated with a time point at which the at least one electronic device is disconnected;
store a new editing command acquired by sequentially processing editing commands received from the connected electronic devices among the plurality of electronic devices after the first checkpoint, in the memory; and
in response to the at least one electronic device being reconnected, transmit the new editing command to the at least one electronic device through the communication circuitry.

2. The server of claim 1, wherein the at least one processor is configured to delete the new editing command stored in the memory after transmitting the new editing command.

3. The server of claim 1, wherein the at least one processor is configured to:
identify a second checkpoint whenever acquiring an editing command received from the connected electronic devices among the plurality of electronic devices after the first checkpoint; and
store the second checkpoint as the latest checkpoint, with respect to the at least one electronic device.

4. The server of claim 3, wherein the at least one processor is configured to:
in response to the at least one electronic device being reconnected, transmit the new editing command and the latest checkpoint to the at least one electronic device through the communication circuitry.

5. The server of claim 1, wherein the at least one processor is configured to:
in response to the at least one electronic device being reconnected, acquire a third checkpoint of the at least one electronic device from the at least one electronic device; and
transmit the new editing command to the at least one electronic device through the communication circuitry based on the acquired third checkpoint and the first checkpoint.

6. The server of claim 1, wherein, the at least one processor is configured to transmit the received editing command to the connected electronic devices except for the at least one electronic device being disconnected through the communication circuitry.

7. The server of claim 6, wherein, whenever the editing command is received from the connected electronic devices among the plurality of electronic devices, the at least one processor is configured to identify the latest checkpoint, and transmit the received editing command together with the latest checkpoint to the connected electronic devices except for the at least one electronic device being disconnected through the communication circuitry.

8. The server of claim 6, wherein the at least one processor is configured to acquire, together with the editing command, a fourth checkpoint in each electronic device that has transmitted the editing command when the editing command is received from the connected electronic devices.

9. The server of claim 6, wherein the at least one processor is configured to:
identify, when the editing command is received from the connected electronic devices, whether the received editing commands collide with each other;
sequentially select, when the collision occurs, editing commands in which the collision occurs; and
identify the second checkpoint according to the sequential selection to notify the connected electronic devices except for the at least one electronic device being disconnected.

10. The server of claim 1, wherein the at least one processor is configured to temporarily store metadata of the at least one electronic device in response to the identifying of the at least one electronic device being disconnected.

11. The server of claim 10, wherein the at least one processor is configured to store, in the memory, the new editing command for the at least one electronic device being disconnected to correspond to the metadata of the at least one electronic device.

12. A method for providing a collaborative editing service in a server, the method comprising:
connecting with a plurality of electronic devices for collaborative editing;
identifying at least one electronic device disconnected from the server among the plurality of electronic devices;
identifying a first checkpoint associated with a time point at which the at least one electronic device is disconnected;
storing a new editing command acquired by sequentially processing editing commands received from the connected electronic devices among the plurality of electronic devices after the first checkpoint; and
in response to the at least one electronic device being reconnected, transmitting the new editing command to the at least one electronic device.

13. The method of claim 12, further comprising:
deleting the stored new editing command after transmitting the new editing command.

14. The method of claim 12, further comprising:
identifying a second checkpoint whenever acquiring an editing command received from the connected electronic devices among the plurality of electronic devices after the first checkpoint; and
storing the second checkpoint as the latest checkpoint with respect to the at least one electronic device.

15. The method of claim 14, wherein the transmitting of the new editing command to the at least one electronic device includes, in response to the at least one electronic device being reconnected, transmitting the new editing command and the latest checkpoint to the at least one electronic device.
